**Europäisches Patentamt**

**European Patent Office**

**Office européen des brevets**

(19)

(11) Veröffentlichungsnummer: **0 208 941**
**B1**

(12) ## EUROPÄISCHE PATENTSCHRIFT

(45) Veröffentlichungstag der Patentschrift:
31.01.90

(51) Int. Cl.⁴: **G 01 F 11/26**

(21) Anmeldenummer: **86108369.9**

(22) Anmeldetag: **19.06.86**

(54) **Dosierverschluss.**

(30) Priorität: **19.07.85 DE 3525814**

(43) Veröffentlichungstag der Anmeldung:
**21.01.87 Patentblatt 87/4**

(45) Bekanntmachung des Hinweises auf die Patenterteilung:
**31.01.90 Patentblatt 90/5**

(84) Benannte Vertragsstaaten:
**AT BE CH DE FR GB IT LI LU NL SE**

(56) Entgegenhaltungen:
**DE-A- 3 522 807**
**US-A- 2 141 871**
**US-A- 2 968 423**
**US-A- 4 407 435**

(73) Patentinhaber: **AHK Alkohol Handelskontor GmbH & Co. KG, Wiedenbrückerstrasse 35-39, D-4780 Lippstadt (DE)**

(72) Erfinder: **Schuster, Wilhelm, Georg-Speyer-Strasse 64, D-6000 Frankfurt/Main (DE)**
Erfinder: **Deak, Fritz, In den Waldgärten 34, D-6000 Frankfurt/Main (DE)**

(74) Vertreter: **Schulze, Ilse, Dipl.-Chem. et al, Gaisbergstrasse 3, D-6900 Heidelberg (DE)**

ACTORUM AG

## Beschreibung

Dosierverschluß für den Hals einer Flasche zum dosierten Ausgeben eines flüssigen Mediums, bei dem ein rohrförmiges, eine Dosierkammer einschließendes Dosiergehäuse vorgesehen ist, das stirnseitig eine Auslaßbohrung für das Medium und in der Wandung Ausnehmungen als Eintrittsöffnungen für das Medium zum Füllen der Dosierkammer aufweist, die Dosierkammer gegenüber der Auslaßbohrung durch eine Abschlußkappe verschlossen ist, deren Boden eine mit der Auslaßbohrung fluchtende Bohrung aufweist, und in der Dosierkammer ein hohler Schwimmer mit seitlicher Flutungsbohrung eingesetzt ist, dessen spezifisches Gewicht größer ist als das des auszugebenden Mediums und dessen der Auslaßbohrung zugekehrtes Ende mit einem dieser Auslaßbohrung zugeordneten kegeligen Ventilsitz zusammenwirkt, wobei der Dosierraum zwischen dem Ventilsitz und der Außenwand des Schwimmers liegt und die Ausnehmungen in der Wandung des Dosiergehäuses in den Dosierraum münden.

Dosiergeräte mit solchen Merkmalen sind bekannt. So beschreibt die DE-A-2 710 626 ein zylindrisches Gehäuse mit Ausnehmungen und einer zu einer großen Ausgußöffnung vorgesehenen Abdichtschräge, in dem ein Schwimmer mit zahlreichen Löchern am Umfang eingesetzt ist. An der Wand des der Ausgußöffnung zugekehrten Endes des Schwimmers ist eine leichte Schräge angeordnet, die der Abdichtschräge am Gehäuse angepaßt ist. Der hohle Schwimmer versperrt den Abfluß, bis die Dosierkammer mit dem auszugebenden Medium gefüllt ist. Ein blasenfreies Füllen, das für die genaue Dosierung unumgänglich ist, ist aber mit diesem Dosiergerät nicht möglich. Auch der Abfluß des Mediums erfolgt unkontrolliert.

Bei der in der DE-A-1 202 672 beschriebenen Dosiereinrichtung ist in der Dosierkammer ein Sammelraum, ein Dosierraum und ein Auffangraum vorgesehen. Das Volumen des Sammelraumes ist wenigstens so groß wie das Volumen der zu dosierenden Flüssigkeitsmenge, das Volumen des Dosierraumes ist gleich groß wie das Volumen der zu dosierenden Flüssigkeitsmenge und das Volumen des Auffangraumes ist wenigstens so groß wie die Hälfte der maximal auftretenden freien Flüssigkeit. Zwar werden aus einer solchen Vorrichtung immer nur bestimmte Flüssigkeitsmengen ausgegeben, doch die Dosiergenauigkeit läßt zu wünschen übrig und es treten erhebliche Unterschiede in den tatsächlich ausfließenden Flüssigkeitsmengen auf.

Bei dem Dosierverschluß gemäß DE-U-7 810 073 ist eine Ventilkugel vorgesehen, die durch Hin- und Herkippen der Flasche in Bewegung versetzt wird und abwechselnd die Ein- und Auslaßöffnungen einer Dosierkammer öffnen bzw. verschließen soll. Doch auch bei dieser Ausführungsform ist die Dosiergenauigkeit unzureichend und sehr unsicher.

Ein Spender zur Ausgabe einer dosierten Flüssigkeitsmenge ist in der US-A-4 407 429 beschrieben. In einem bewegbaren hohlen Dichtkörper ist im zylindrischen Durchgang eine Stahlkugel eingesetzt, die bei Drehung des mit dem Dichtverschluß versehenen Spenders in Ausgabestellung im Durchgang nach unten fällt und diesen verschließt. Dabei wird der Dichtkörper oder Schwimmer gegen die Ausgußöffnung des Dichtverschlusses bewegt, während die Flüssigkeit aus dieser Öffnung fließt. Auch dieser kugelgesteuerte Dosierverschluß gewährleistet keine genaue Dosierung der austretenden Flüssigkeitsmenge.

Die aus der DE-A-3 522 807 bekannte Dosiervorrichtung verwendet als Dichtkörper ebenfalls eine Stahlkugel, bzw. ein tellerförmiges Dichtelement mit ebener Dichtfläche sowie schräger Dichtfläche, die für eine Punktdichtung an einer Ringschulter vorgesehen ist. Beide Ausführungsformen können aber eine genaue Dosierung der ausgegebenen Flüssigkeit nicht garantieren.

Weitere Dosiervorrichtungen mit Ventilkugeln sind in der US-A-2 141 871 und in der US-A-2 968 423 beschrieben. Aber weder die über einen Spiralweg geführte Metallkugel gemäß US-A-2 141 871 noch die in einem geradlinigen Durchgang eines Gehäuses geführte Kugel gemäß US-A-2 968 423 beseitigen die Nachteile bekannter Vorrichtungen dieser Art.

Die Dosiervorrichtung gemäß DE-U-8 411 429 weist eine Dosierkammer auf, durch die ein axial eindrückbarer Schieber mit an seinem Umfang versehenen Federn geführt ist, die sich auf dem Dosierkammerboden abstützen. In Normalstellung des Schiebers sitzen die Federn nicht auf dem Dosierkammerboden auf, so daß Durchflußöffnungen im Boden ganz geöffnet sind. Ein mit dem Schieber gekoppeltes Verschlußteil verschließt dabei eine Auslaßöffnung der Dosierkammer. Wenn der Schieber in die Dosierkammer eingedrückt wird, wird die Auslaßöffnung freigegeben und zugleich legen sich die Federn an den Dosierkammerboden an und verschließen die Durchflußöffnungen. Wird der Schieber nur leicht eingedrückt, bleibt ein gewisser Teil der Durchflußöffnungen frei, so daß eine beliebige Flüssigkeitsmenge aus dem Behälter entnommen werden kann. Es hängt also von der Manipulation des Benutzers ab, wie groß die Dosiergenauigkeit ist. Außerdem werden bei dieser Ausführungsform mehrere, zum Teil sehr genau passende Einzelteile benötigt.

Bei all diesen bekannten Dosiereinrichtungen ist der besondere Nachteil die mangelhafte Dosiergenauigkeit und es werden Schwankungen bis nahezu 75% gemessen. Dabei wird die Dosierung immer ungenauer, je weniger Flüssigkeit in der Flasche oder dem Behälter ist.

Aufgabe der Erfindung ist es, einen Dosierverschluß der eingangs genannten Art zu schaffen, mit dem das flüssige Medium äußerst genau dosiert wird, bis die Flasche bis zu einer Restneige geleert ist.

Diese Aufgabe wird durch einen Dosierverschluß der eingangs genannten Art dadurch gelöst, daß der Schwimmer aus einem einseitig offenen Hohlkörper mit einem zylindrischen Teil und einem daran angeformten, spitz zulaufenden, geschlossenen Konus besteht, dessen Spitze als Dichtkegel dem Ventilsitzt angepaßt ist, und eine Flutungsbohrung in der Wand des zylindrischen Teils oder in der Wand des Konus ausgespart ist und in Ruhestellung des Schwimmers einen Teil der Ausnehmungen frei läßt, der Schwimmer die Dosierkammer in einen Dosierraum und in eine Luftkammer teilt, die zwischen der Innenwand des Schwimmers und dem Boden der Abschlußkappe liegt und die Bohrung im Boden eine Entlüftungsbohrung ist, die in die Luftkammer führt.

Zweckmäßige Weiterbildungen des Dosierverschlusses sind in den abhängigen Ansprüchen gekennzeichnet.

Der Dosierverschluß besteht in seiner Grundform aus drei Bauteilen, nämlich einem rohrförmigen, die Dosierkammer einschließenden Dosiergehäuse, einer Abschlußkappe und einem in die Dosierkammer eingesetzten Schwimmer. Der Dosierverschluß wird in einen Flaschenhals flüssigkeitsdicht eingesetzt, derart, daß etwa die Hälfte des rohrförmigen Dosiergehäuses in das Flascheninnere ragt. Zur Entnahme der Flüssigkeit wird die Flasche mit der Mündung nach unten gehalten, worauf Flüssigkeit in die Dosierkammer einströmt. Der erfindungsgemäß gestaltete Schwimmer erhält so lange Auftrieb, bis die Luft aus der Dosierkammer verdrängt ist. Auf diese Weise wird die Dosierkammer blasenfrei mit Flüssigkeit gefüllt. Danach sinkt der Schwimmer zusammen mit der auslaufenden Flüssigkeit in die Dosierkammer ab. Bei Erreichen der Stirnwand des Dosiergehäuses, in der die Auslaßbohrung vorgesehen ist, gleitet die kegelige Spitze des Konus des Schwimmers in den entsprechend ausgeformten kegeligen Ventilsitz der Auslaßbohrung und dichtet diese verläßlich ab.

Die Dosiergenauigkeit eines solchen Dosierverschlusses ist ausserordentlich groß und Messungen haben für verschiedene Einstellungen nur vernachläßigbare Schwankungen gezeigt. Dieses Ergebnis ist insbesondere da wichtig, wo es um die Verwendung von Substanzen geht, die nur in möglichst genauer Dosierung verwendet werden sollen, so beispielsweise Pflanzenschutzmittel, Düngemittel und dergleichen. Die genaue Abstimmung der einander ergänzenden Bauteile des Dosiergehäuses und des Schwimmers sorgt nicht nur für eine einwandfreie Dichtung, sondern verhindert ein Hängen des Schwimmers durch Adhäsion. Ein weiterer Vorteil des erfindungsgemäßen Dosierverschlusses besteht darin, daß bei der Ausgabe von für den Menschen nicht harmloser Substanzen die Hand des Benutzers mit der die Substanz enthaltenden Flüssigkeit nicht in Berührung kommt. Schließlich bietet die Bauweise des Dosierverschlusses die Möglichkeit, das Ausgabevolumen durch ein einfaches, leicht zu handhabendes Zusatzmittel zu verändern bzw. nach Wunsch einzustellen.

Der erfindungsgemäße Dosierverschluß wird anhand einiger in den Zeichnungen dargestellter Ausführungsbeispiele näher erläutert. Es zeigen:

Fig. 1 eine Seitenansicht, teilweise im Schnitt, eines in einen Hals einer aufrechtstehenden Flasche eingesetzten Dosierverschlusses;

Fig. 2 eine der Fig. 1 entsprechende Ansicht mit um 180° gedrehter Flasche;

Fig. 3 eine vergrößerte Seitenansicht einer Ausführungsform eines Schwimmers;

Fig. 4 eine Explosionszeichnung einer weiteren Ausführungsform des Dosierverschlusses;

Fig. 5 eine Seitenansicht des in einen Flaschenhals eingesetzten Dosierverschlusses gemäß Fig. 4;

Fig. 6 eine der Fig. 5 entsprechende Ansicht mit um 180° gedrehter Flasche, wobei der Dosierverschluß teilweise im Schnitt dargestellt ist; und

Fig. 7 eine Seitenansicht, teilweise im Schnitt eines in einen Flaschenhals eingesetzten Dosierverschlusses mit Verstellvorrichtung.

Der Dosierverschluß besteht bei allen Ausführungsformen aus einem rohrförmigen Dosiergehäuse 1, das etwa bis zu seiner Hälfte in den Hals einer Flasche F dichtend eingesetzt ist. Das Dosiergehäuse 1 umschließt eine rohrförmige Dosierkammer 2 und weist an seiner aus dem Flaschenhals ragenden Stirnseite eine Auslaßbohrung 3 zur Ausgabe eines flüssigen Mediums auf. In der Wand des Dosiergehäuses 1 sind Ausnehmungen 8 ausgespart, die als Flutungsöffnungen für die Flüssigkeit dienen.

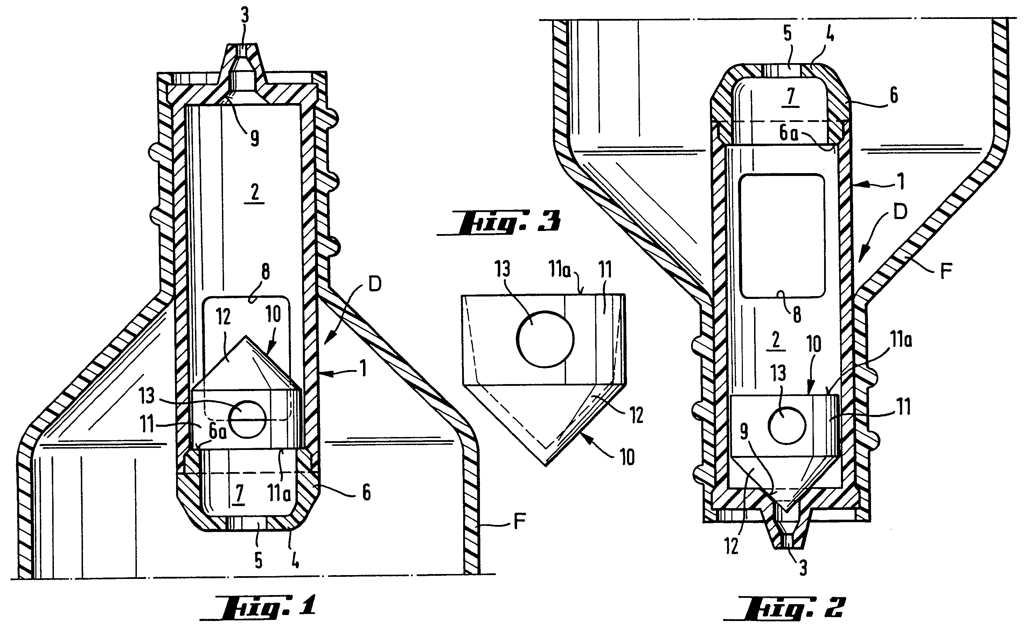

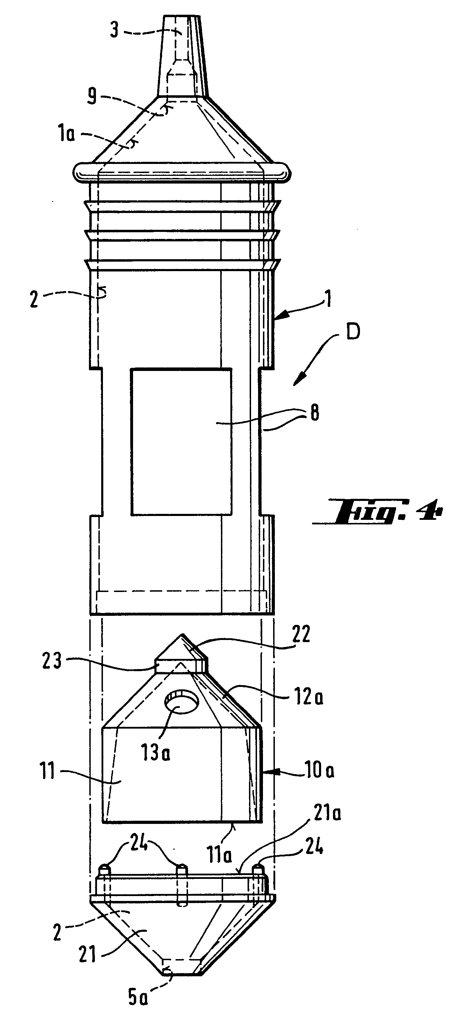

Bei der in den Fig. 1 und 2 dargestellten Ausführungsform ist der im Inneren der Flasche F befindliche Boden 4 einer in die Dosierkammer 2 eingesetzten Abschlußkappe 6 mit einer Entlüftungsbohrung 5 versehen, die in eine Luftkammer 7 der Dosierkammer 2 führt. Die Abschlußkappe 6 ist fest in das offene Ende des Dosiergehäuses 1 eingepaßt. Die Umfangskante der Abschlußkappe 6 steht in das Innere der Dosierkammer 2 vor und die so geschaffene Stufe 6a dient als Begrenzung für den Weg eines Schwimmers 10.

In die Dosierkammer 2 ist ein Schwimmer 10 eingesetzt, der an der Innenwand des die Dosierkammer 2 umschließenden Dosiergehäuses 1 gleitet. Der Schwimmer 10 besteht aus einem zylindrischen oder leicht konischen Teil 11 mit flachem Boden bzw. glattem umlaufendem Umfangsrand 11a und einem gegenüber diesen Boden angeformten, spitz zulaufenden geschlossenen Konus 12. Das spezifische Gewicht des Schwimmers 10 ist in jedem Fall größer als das spezifische Gewicht des auszugebenden Mediums. Der Schwimmer 10 ist also ein am Boden offener und an der Spitze des Konus 12 geschlossener Hohlkörper. Die Spitze des Konus 12 ist der Dichtkegel, der gegen die Auslaßbohrung 3 gerichtet ist, deren untere, in das Innere der Dosierkammer 2 weisende Randbegrenzung als Dicht- oder Ventilsitz 9 für den Dichtkegel des Schwimmers 10 dient. Der untere Rand des Schwimmers 10 sitzt auf der Stufe 6a der Abschlußkappe 6. Die Flutungsbohrung 13 ist in der Wand des zylindrischen Teils 11 des Schwimmers 10 ausgespart.

Durch den Schwimmer 10 wird die Dosierkammer 2 geteilt, und zwar in eine Luftkammer 7 zwischen dem Boden des Schwimmers und dem Boden 4 der Dosierkammer 2 und in einen eigentlichen Dosierraum zwischen dem Konus 12 des Schwimmers 10 und dem Ventilsitz 9 unterhalb der Auslaßbohrung 3.

Der Schwimmer 10 ist so in die Dosierkammer 2 eingesetzt, daß auf alle Fälle ein Teil der als Eintrittsöffnungen für Flüssigkeit dienenden Ausnehmungen 8 im Dosiergehäuse 1 freibleibt.

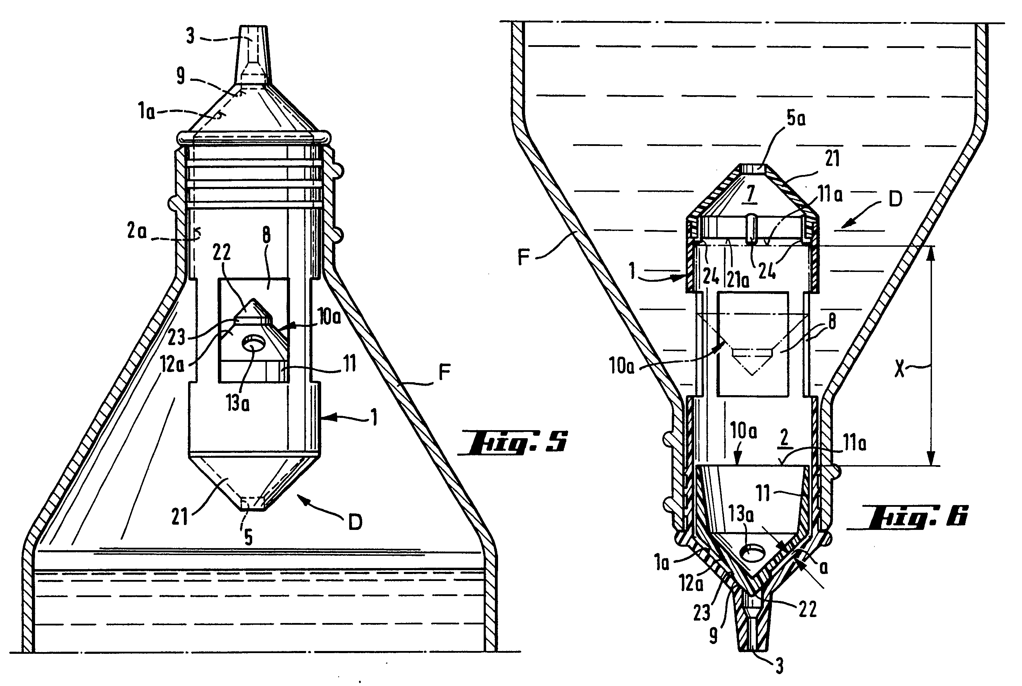

Eine weitere Ausführungsform des Dosierverschlusses ist in den Fig. 4 bis 6 gezeigt. Die Grundelemente sind die gleichen wie bei der erst beschriebenen Ausführungsform. Gleiche Bauteile sind mit gleichen Bezugsziffern gekennzeichnet.

Der Schwimmer 10a dieser Ausführungsform besteht ebenfalls aus einem zylindrischen Teil 11, an dem ein Konus 12a angeformt ist, dessen als Dichtkegel 22 dienende Spitze aber vom Konus 12a durch einen ringförmigen Absatz 23 abgesetzt ist. Die Flutungsbohrung 13a dieses Schwimmers 10a ist in der Wand des Konus 12a ausgespart.

Das mit der Auslaßbohrung 3 versehene Ende des Dosiergehäuses 1 ist konisch ausgebildet. Der so gebildete Konus 1a am Dosiergehäuse 1 und der Konus 12a des Schwimmers 10a sind aufeinander abgestimmt. Der Absatz 23 zwischen Dichtkegel 22 und Konus 12a sorgt dafür, daß beim Anliegen des Dichtkegels 22 am Ventilsitz 9 an der Auslaßbohrung 3 des Dosiergehäuses 1 zwischen der Außenwand des Konus 12a, des Schwimmers 10a und der Innenwand des Konus 1a des Dosiergehäuses 1 ein kleiner Spalt $a$ freibleibt, der eine Adhäsion des Schwimmers 10a am Dosiergehäuse 1 verhindert.

Die Abschlußkappe 21, deren Wand konisch bis zur Entlüftungsbohrung 5a verläuft, wird, wie bei der erstbeschriebenen Ausführungsform in das offene Ende des Dosiergehäuses 1 eingesetzt. Der Boden der Dosierkammer 2 ist daher konisch verjüngt. Die in das Innere der Dosierkammer 2 vorstehende Kante der Abschlußkappe 21 bildet auch hier eine Stufe 21a, an der abstehende Zapfen 24 angeformt sind. Die freie Kante 11a des Schwimmers 10a sitzt daher bei aufrechtstehender Flasche F auf diesen Zapfen 24, wodurch auch hier eine Adhäsion des Schwimmers 10a verhindert wird. Die Rückführung des Schwimmers wird daher beschleunigt und es gibt weniger Totflüssigkeit um den Schwimmer, die zurückfließen muß.

Die Handhabung zur dosierten Entnahme eines flüssigen Mediums geschieht in einfacher Weise.

Die mit dem Dosierverschluß versehene Flasche wird mit der Mündung, d.h. mit der Auslaßbohrung des Dosiergehäuses 1 nach unten gehalten, worauf die Flüssigkeit durch die Ausnehmungen 8 in den Dosierraum der Dosierkammer 2 eintreten kann.

In Ruhestellung des Schwimmers 10 bzw. 10a läßt die Flutungsöffnung 13 bzw. 13a einen kleinen Bereich im unteren Teil der Ausnehmungen 8 im Dosiergehäuse 1 frei. Aufgrund des spezifischen Gewichts des Schwimmers 10 bzw. 10a bzw. aufgrund des mit Luft gefüllten hohlen Schwimmers erhält dieser so lange Auftrieb, bis die Luft in der Dosierkammer 2 durch Flüssigkeit verdrängt ist. Diese «Haltezeit» reicht aus, um die Dosierkammer 2 blasenfrei mit Flüssigkeit zu füllen. Erst wenn dies erfolgt ist und Flüssigkeit im Inneren des Schwimmers die Luft verdrängt hat, sinkt der Schwimmer 10 bzw. 10a zusammen mit der auslaufenden Flüssigkeit im Dosierraum ab. Bei Erreichen der Stirnseite der Dosierkammer 2 gleitet die Spitze des Konus 12 bzw. 12a des Schwimmers in den ausgeformten kegeligen Ventilsitz 9 in der Auslaßbohrung 3 der Dosierkammer 2 und dichtet verläßlich ab (Fig. 2 bzw. Fig. 6). Wenn nun die Flasche F wieder in eine aufrechtstehende Lage gebracht wird, fällt der Schwimmer 10 bzw. 10a nach unten in der Dosierkammer 2 zurück und es kann erneut dosiert werden.

Bei einer weiteren vorteilhaften Ausführungsform kann durch ein einfaches Zusatzteil der Dosierverschluß D so gestaltet werden, daß die zu entnehmende Flüssigkeitsmenge durch Einstellen wählbar ist.

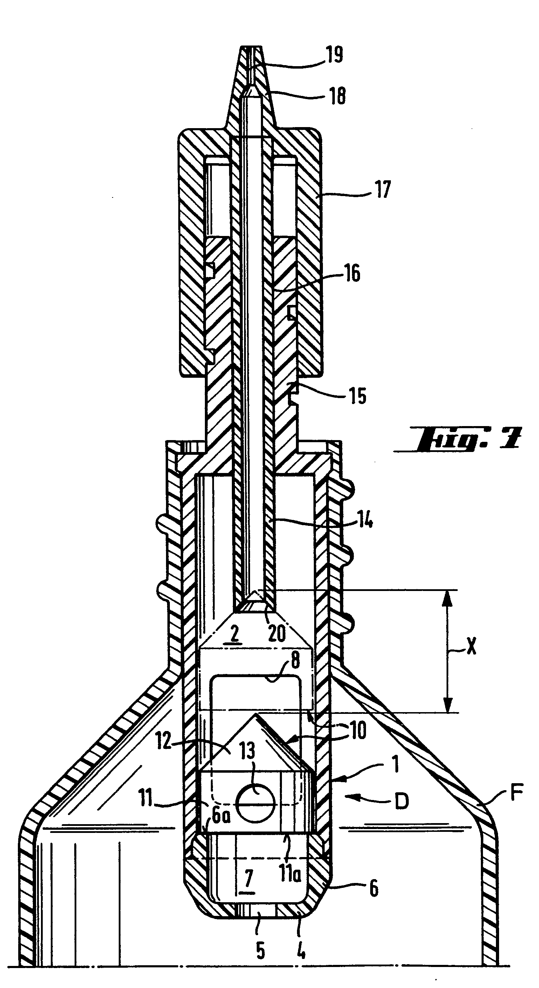

Dies ist in Fig. 7 zusammen mit der erstbeschriebenen Ausführungsform des Dosierverschlusses gezeigt. Hierzu wird am stirnseitigen Ende des Dosiergehäuses 1 anstelle der Auslaßbohrung eine einer solchen Bohrung entsprechende Öffnung vorgesehen, durch die ein Röhrchen 14 gesteckt ist. Das Röhrchen 14 ist in einer Axialbohrung 16 eines am Stirnende des Dosiergehäuses 1 angeformten Ansatzes 15 verschiebbar geführt. Das freie nach oben aus dem Ansatz 15 vorstehende Ende des Röhrchens 14 ist kraftschlüssig in der Deckplatte einer Kappe 17 verbunden, deren zylindrische Seitenwand den Außenumfang des Ansatzes 15 umgreift und auf diesem, beispielsweise durch ineinandergreifende Gewinde oder auf andere Weise, axial verschiebbar ist. Das in der Deckplatte der Kappe 17 befindliche Ende des Röhrchens 14 mündet in der hier in der Kappe 17 vorgesehenen Auslaßbohrung 19 für das auszugebende flüssige Medium. Durch Axialverschiebung der Kappe 17 auf dem Ansatz 15 am Verschlußkörper 1 wird das Röhrchen 14 in die Dosierkammer 2 weiter hinein oder aus dieser weiter heraus bewegt, wodurch die Wegstrecke X des Schwimmers 10 und damit die auszugebende Flüssigkeitsmenge variiert werden kann. An der in der Dosierkammer 2 befindlichen Einlauföffnung weist das Röhrchen 14 einen kegeligen Ventilsitz 20 auf, an den sich das spitze Ende des Konus 12 des Schwimmers 10 dichtend anlegt, sobald die dosierte Flüssigkeitsmenge ausgegeben ist. Je kürzer der Weg des Schwimmers 10 umso kleiner ist der Dosierraum und entsprechend geringer die dosierte Flüssigkeitsmenge.

Die mit dem Röhrchen 14 verbundene Kappe 17 kann als Schraubkappe ausgebildet sein, die durch Verdrehen auf einem entsprechenden Außengewinde des Ansatzes 15 ein- und aufgedreht werden kann und dabei das Röhrchen 14 mitnimmt. Mit Hilfe von auf dem Außenmantel des Ansatzes 15 sichtbar angebrachten Markierungen, kann die jeweils gewünschte Flüssigkeitsmenge eingestellt werden. Das Verschieben der Kappe 17 am Ansatz 15 kann auch auf andere Weise vorgenommen werden.

Mit einem solchen erfindungsgemäßen Dosierverschluß ist es möglich, ohne zusätzliche Manipulationen fest vorgegebene Flüssigkeitsmengen weitaus genauer zu dosieren als mit bekannten Vorrichtungen dieser Art. Zahlreiche Versuche haben sehr zufriedenstellende Dosiergenauigkeiten ergeben, die nur bei der Ausgabe von Restmengen aus dem Rahmen fielen.

So wurde bei einer auf 13 Gramm eingestellten Ausgabemenge von Brennspiritus bei 23 Zyklen ein Mittelwert von 13,23 festgestellt, wobei die Werte sich in der Regel um 13 g bewegten, mit einer Ausnahme von 15,6 und der Restausgabe von 10,1 g. Eine Einstellung der dosierten Mengen auf 10 Gramm ergab bei 33 Zyklen einen Mittelwert von 10,11 g, wobei hier eine Höchstmenge von 10,6 g und eine Restausgabe von 7,2 g gemessen wurde. Das Medium war auch hier Brennspiritus.

Die Ausgabe von Wasser mit einer Einstellung auf 14 Gramm ergab bei 29 Zyklen einen Mittelwert von 14,45, wobei am Ende der Ausgabe eine Höchstmenge von 17,2 und eine Mindestmenge von 12,1 g gemessen wurde.

Die Auslaßbohrung 3 bzw. 19 wird bei Nichtgebrauch durch eine dicht sitzende Kappe (nicht dargestellt) verschlossen.

**Patentansprüche**

1. Dosierverschluß für den Hals einer Flasche zum dosierten Ausgeben eines flüssigen Mediums, bei dem ein rohrförmiges, eine Dosierkammer (2) einschließendes Dosiergehäuse (1) vorgesehen ist, das stirnseitig eine Auslaßbohrung (3) für das Medium und in der Wandung Ausnehmungen (8) als Eintrittsöffnungen für das Medium zum Füllen der Dosierkammer (2) aufweist, die Dosierkammer (2) gegenüber der Auslaßbohrung (3) durch eine Abschlußkappe (6; 21) verschlossen ist, deren Boden eine mit der Auslaßbohrung (3) fluchtende Bohrung (5; 5a) aufweist, und in der Dosierkammer (2) ein hohler Schwimmer (10; 10a) mit seitlicher Flutungsbohrung (13; 13a) eingesetzt ist, dessen spezifisches Gewicht größer ist als das des auszugebenden Mediums und dessen der Auslaßbohrung (3) zugekehrtes Ende mit einem dieser Auslaßbohrung zugeordneten kegeligen Ventilsitz (9) zusammenwirkt, wobei der Dosierraum zwischen dem Ventilsitz (9) und der Außenwand des Schwimmers (10; 10a) liegt und die Ausnehmungen (8) in der Wandung des Dosiergehäuses (1) in den Dosierraum münden, dadurch gekennzeichnet, daß der Schwimmer (10; 10a) aus einem einseitig offenen Hohlkörper mit einem zylindrischen Teil (11) und einem daran angeformten, spitz zulaufenden, geschlossenen Konus (12; 12a) besteht, dessen Spitze als Dichtkegel dem Ventilsitz (9) angepaßt ist, und eine Flutungsbohrung (13 bzw. 13a) in der Wand des zylindrischen Teils (11) oder in der Wand des Konus (12 bzw. 12a) ausgespart ist und in Ruhestellung des Schwimmers (10; 10a) einen Teil der Ausnehmungen frei läßt, der Schwimmer (10; 10a) die Dosierkammer (2) in einen Dosierraum und in eine Luftkammer (7) teilt, die zwischen der Innenwand des Schwimmers (10; 10a) und dem Boden (4) der Abschlußkappe (6; 21) liegt und die Bohrung im Boden (4) eine Entlüftungsbohrung (5; 5a) ist, die in die Luftkammer (7) führt.

2. Dosierverschluß nach Anspruch 1, dadurch gekennzeichnet, daß am Schwimmer (10a) der Dichtkegel (22) durch einen ringförmigen Absatz (23) vom Konus (12a) abgesetzt ist und die Kontur dieses Konus (12a) dem konischen Ende des Dosiergehäuses (1) angepaßt ist.

3. Dosierverschluß nach Anspruch 1, dadurch gekennzeichnet, daß die in das offene Ende der Dosierkammer (2) eingesetzte Abschlußkappe (21) an ihrer über die Innenwand der Dosierkammer (2) vorstehende, eine Stufe (21a) bildende Kante abstehende Zapfen (24) aufweist.

4. Dosierverschluß nach Anspruch 1, dadurch gekennzeichnet, daß das Volumen des auszugebenden Mediums durch Verändern des Weges des Schwimmers (10) in der Dosierkammer (2) einstellbar ist.

5. Dosierverschluß nach Anspruch 1 und 4, dadurch gekennzeichnet, daß zum Verändern des Weges des Schwimmers (10) ein durch die Auslaßbohrung (3) in die Dosierkammer (2) gestecktes und darin verschiebbares Röhrchen (14) vorgesehen ist, dessen freies Ende als Auslaßbohrung (19) und dessen in die Dosierkammer (2) ragendes Ende als kegeliger Ventilsitz (20) für den Konus (12) des Schwimmers (10) ausgebildet ist.

**Claims**

1. Dispensing closure for the neck of a bottle for the dispensed delivery of a liquid medium, in which a tubular dispensing housing (1) surrounding a dispensing chamber (2) is provided which at its end has an outlet bore (3) for the medium, and in the wall has cutouts (8) serving as entry openings for the medium, for filling the dispensing chamber (2), the dispensing chamber, opposite to the outlet bore (3), being closed by a closure cap (6; 21) the base of which has a bore (5; 5a) aligned with the outlet bore (3), a hollow float (10; 10a) with a lateral flow bore (13; 13a) being disposed in the dispensing chamber (2), its specific gravity being greater than that of the medium to be dispensed, its end facing the outlet bore cooperating with a conical valve seat (9) associated with the outlet bore, the dispensing space lying between the valve seat (9) and the outer wall of the float (10; 10a), the cutouts (8) in the wall of the dispensing housing (1) opening into the dispensing chamber, characterised in that the float (10; 10a) consists of a hollow body open at one side, with a cylindrical part (11) and a closed cone (12; 12a) tapering to a tip formed thereon, the tip fitting the valve seat (9) as a sealing cone, a flow bore (13 or 13a) being provided in the wall of the cylindrical part (11) or in the wall of the cone (12 or 12a), a part of the cutouts being left free in the rest position of the float (10; 10a), the float (10; 10a) dividing the dispensing chamber (2) into a dispensing space and into an air chamber (7) which lies between the inner wall of the float (10; 10a) and the base (4) of the closure cap (6; 21) and the bore in the base (4) acts as a venting bore (5; 5a) leading into the air chamber (7).

2. Dispensing closure according to claim 1, characterised in that the sealing cone (22) on the float (10a) is offset from the cone (12a) by a ring shaped projection (23) and the contour of this cone (12a) is matched to the conical end of the dispensing housing (1).

3. Dispensing closure according to claim 1, characterised in that the closure cap (21) mounted on the open end of the dispensing chamber (2) has studs (24) projecting from a face formed by a step (21a) directed to the inner wall of the dispensing chamber (2).

4. Dispensing closure according to claim 1, characterised in that the volume of the medium to be dispensed is adjusted by altering the path of the float (10) in the dispensing chamber (2).

5. Dispensing closure according to claim 1 and 4, characterised in that for altering the path of the float (10) a small tube (14) inserted through the outlet bore (3) into the dispensing chamber (2) and slidable therein, is provided, its free end serving as an outlet bore (19) and its end extending into the dispensing chamber (2) being formed as a conical valve seat (20) for the cone (12) of the float (10).

## Revendications

1. Fermeture de dosage pour le col d'une bouteille de dosage d'un milieu liquide, dans laquelle est prévue un boîtier de dosage (1) tubulaire, comprenant une chambre de dosage (2) qui a frontalement un alésage de sortie (3) pour le liquide et des évidements (8) dans la paroi comme orifice d'entrée du liquide devant remplir la chambre de dosage (2), la chambre de dosage (2) à l'opposé de l'alésage de sortie (3) est fermée par une coiffe de fermeture, dont le fond est muni d'une ouverture (15, 15a) alignée avec celle de la sortie (3), et dans la chambre de dosage (2) est placée un flotteur creux (10, 10a) avec un alésage d'alimentation latéral (13, 13a), dont le poids spécifique est supérieur à celui du milieu à doser, et dont l'extrémité dirigée vers l'alésage de sortie (3) coopère avec un siège de soupape (9) conique adapté à ce trou de sortie, la chambre de dosage est disposée entre le siège de soupape (9) et la paroi externe du flotteur (10, 10a) et les évidements (8) de la paroi du boîtier de dosage (1) débouchent dans la chambre de dosage, caractérisée en ce que le flotteur (10, 10a) est constitué d'un corps creux ouvert d'un côté avec une partie cylindrique (11) et une partie adaptée en forme de cône fermé (12, 12a) dont la pointe s'adapte au siège de soupape (9) comme cône d'étanchéité, et un alésage d'alimentation (13 ou 13a) est ménagé dans la paroi de la partie cylindrique (11) ou dans la paroi du cône (12 ou 12a) et en position de repos du flotteur (10, 10a), il laisse libre une partie des évidements; le flotteur (10, 10a), sépare la chambre de dosage (2) en une chambre de dosage et une chambre d'air (7), qui se trouve entre la paroi interne du flotteur (10, 10a) et le fond (4) de la coiffe de fermeture (6, 21) et l'alésage dans le fond (4) est un alésage d'aération (5, 5a), qui conduit dans la chambre d'air (7).

2. Fermeture de dosage selon la revendication 1, caractérisée en ce que sur le flotteur (10a) du cône d'étanchéité (22) est ménagé un téton annulaire (23) à partir du cône (12a) et le contour de ce cône (12a) correspond à l'extrémité conique du carter de dosage (1).

3. Fermeture de dosage selon la revendication 1, caractérisée en ce que la coiffe de fermeture (21) utilisée à l'extrémité ouverte de la chambre de dosage (2) présente sur le bord formant un épaulement pénétrant au delà de la paroi interne de la chambre de dosage (2), des ergots (24) qui font saillie.

4. Fermeture de dosage selon la revendication 1, caractérisée en ce que le volume du milieu à distribuer est réglable par modification de la course du flotteur (10) dans la chambre de dosage (2).

5. Fermeture de dosage selon les revendications 1 et 4, caractérisée en ce que pour modifier la course du flotteur (10) est prévu un petit tube (14) placé dans la chambre de dosage (2), traversant le trou de sortie (3) et pouvant y coulisser, dont l'extrémité libre est en forme d'alésage de sortie (19) et dont l'extrémité se trouvant dans la chambre de dosage (2) est en forme de siège conique de soupape (20) pour le cône (12) du flotteur (10).

Fig. 1

Fig. 2

Fig. 3

**Fig. 4**

Fig. 6

Fig. 5

*Fig. 7*